Europäisches Patentamt

European Patent Office

Office européen des brevets

(11) Veröffentlichungsnummer: **0 280 160**
**A1**

# (12) EUROPÄISCHE PATENTANMELDUNG

(21) Anmeldenummer: 88102237.0

(22) Anmeldetag: 16.02.88

(51) Int. Cl.4: **B01D 45/08** , B01D 51/02 , B01D 50/00

(30) Priorität: 18.02.87 DE 8702501 U

(43) Veröffentlichungstag der Anmeldung:
31.08.88 Patentblatt 88/35

(84) Benannte Vertragsstaaten:
AT BE CH DE FR GB IT LI LU NL SE

(71) Anmelder: **Gutermuth, Paul, sen.**
**Augustastrasse 48**
**D-6456 Langenselbold(DE)**

(72) Erfinder: **Gutermuth, Paul, sen.**
**Augustastrasse 48**
**D-6456 Langenselbold(DE)**

(74) Vertreter: **Stoffregen, Hans-Herbert, Dr.**
**Dipl.-Phys. et al**
**Patentanwälte Strasse & Stoffregen**
**Salzstrasse 11a Postfach 2144**
**D-6450 Hanau/Main 1(DE)**

(54) Abscheidervorrichtung für gasförmige Fluide.

(57) Es wird eine Abscheidervorrichtung für gasförmige Fluide wie Ölnebel vorgeschlagen, die vorzugsweise dreistufig ausgebildet ist. In äußeren Stufen (10, 14) erfolgt dabei ein Abscheiden von Partikeltropfen der Größe von mehr als $3\mu m$ Durchmesser. In einer mittleren Stufe (12) findet ein Agglomerieren von Partikeln der Größe kleiner als $3\mu m$ statt. Das Agglomerieren erfolgt vorzugsweise durch ein Drahtgestrickt.

Fig.1

EP 0 280 160 A1

## Abscheidervorrichtung für gasförmige Fluide

Die Erfindung bezieht sich auf eine Abscheidervorrichtung für gasförmige Fluide wie Ölnebel, insbesondere bestimmt zum Absaugen und Reinigen von von Bearbeitungsmaschinen aufsteigenden Öldämpfen.

Entsprechende Abscheidervorrichtungen für die Absaugung von Bearbeitungsmaschinen können als elektrostatisches Filter ausgebildet sein, die jedoch den Nachteil zeigen, daß bei einem hohen Feuchtigkeitsanteil der abzusaugenden Fluide ein Durchschlagen und damit Funktionsunfähigkeit des Filters erfolgt. Zudem sind entsprechende elektrostatische Filter recht teuer. Ferner gibt es Abscheider in Form von Vliesfiltern, wobei das Filtermaterial in Form eines Vlieses absatzweise durch den Abscheider transportiert wird. Die in dem Vlies abgeschiedenen Partikel werden nicht zurückgewonnen. Vielmehr wird das Vlies nach dessen Benutzung deponiert oder vernichtet. Entsprechende Vliesfilter sind bei einem hohen Anfall von zu reinigenden Fluiden relativ schnell zugesetzt, so daß ein hoher Verbrauch an Vliesmaterial erforderlich ist.

Aufgabe der vorliegenden Erfindung ist es, eine Abscheidervorrichtung der eingangs beschriebenen Art so auszubilden, daß mit konstruktiv einfachen Mitteln ein Reinigen von insbesondere Öldämpfen möglich ist, wobei auch Partikelgrößen von kleiner als 3μm sicher abgeschieden werden sollen, ohne daß es nicht wiederverwendbarer Materialien oder elektrostatischer Filtereinrichtungen bedarf. Gleichzeitig soll eine Rückgewinnung der abgeschiedenen Partikel möglich sein.

Die Aufgabe wird erfindungsgemäß dadurch gelöst, daß die Abscheidervorrichtung zumindest dreistufig ausgebildet ist, wobei äußere ein Abscheiden von Partikeln bewirkende Stufen jeweils in zumindest zwei gegenüberliegenden Reihen angeordnete offene einander zugewandte Profilteile aufweisen und eine innere Stufe ein eine Agglomeration von Partikeln bewirkender Agglomerator ist. Vorzugsweise weist der Abscheider genau drei Stufen auf, wobei die dem Agglomerator vor-und nachgeordneten Stufen gleich ausgebildet sind und aus den in Reihen angeordneten offenen Profilteilen bestehne, durch die die zu reinigenden Fluide gelenkt werden. In diesen Stufen erfolgt ein Abscheiden und Kondensieren. Durch eine diesbezügliche Stufe werden Partikel der Größenordnung von ca. 3μm wirksam abgeschieden. Auch Feststoffpartikel wie Schleifstaub werden abgeschieden. Kleinere Partikel können eine entsprechende Stufe gegebenenfalls durchdringen. In dem der ersten Stufe nachgeschalteten Agglomerator erfolgt jedoch eine Agglomeration kleinerer Partikel zu größeren Partikeln bis zu Fluidtropfen, die in der nachgeschalteten weiteren Stufe sicher abgeschieden werden, da die agglomerierten Partikel einen Durchmesser von mehr als 3μm aufweisen.

Vorzugsweise ist der Agglomerator als Drahtgestrick ausgebildet, wobei Drahtfäden der Stärke von vorzugsweise 150 μm miteinander so verwoben sind, daß insbesondere in den Kreuzungspunkten der Drahtfäden ein Agglomerieren von kleinsten Partikeln zu größeren Partikeln erfolgt. Bei einer durch den Agglomerator durchtretenden Luftgeschwindigkeit von mindestens 5m pro Sekunde werden diese Partikel dann mitgerissen, um in der nachgeordneten Stufe abgeschieden zu werden. Im Agglomerator erfolgt selbst grundsätzlich kein Abscheiden und Ansammeln von Partikeln, die andernfalls möglicherweise zu einer Funktionsunfähigkeit des Agglomerators führen würden.

Um im Agglomerator die erforderliche Geschwindigkeit für die zu agglomerierenden Partikel zu erzielen, wird nach einer Ausgestaltung der Erfindung vorgeschlagen, daß der Querschnitt des von den Fluiden durchsetzten Agglomerators kleiner als der jeweilige Querschnitt der vor-bzw. nachgeordneten Stufe ist. Dabei können die Stufen in einem quaderförmigen Gehäuse angeordnet sein. Durch die Änderung des Querschnitts von der ersten Stufe zum Agglomerator bzw. von diesem zu der dritten Stufe ergibt sich eine in etwa trichterförmige Strömungsumhüllende, deren Spitzen dem Agglomerator zugewandt sind. Der Abscheider selbst kann in bezug auf einen Ventilator druckoder saugseitig angeordnet sein.

Durch die erfindungsgemäße Lehre wird folglich auf rein mechanischem Wege ein Reinigen von Fluiden wie Ölnebeln, Öldämpfen ermöglicht, ohne daß Vliesstoff oder eine elektrostatische Abscheidung erforderlich ist.

Dabei wird nach einer weiteren Ausgestaltung der Erfindung das in den echten Abscheiderstufen zurückgewonnene Fluid wie z.B. Öl einer Sammelleitung zugeführt, wobei vor dieser jeweils ein Syphon angeordnet ist, um sicherzustellen, daß durch den von dem Ventilator hervorgerufenen Druck ein "Zurücksaugen" der abgeschiedenen Flüssigkeit nicht erfolgt.

Die dem Agglomerator vor-bzw. nachgeordneten Abscheiderstufen weisen vorzugsweise einen Aufbau auf wie er in der Europäischen Patentanmeldung 0206204 beschrieben ist und sich dadurch auszeichet, daß die freien Ränder der Profilteile der einen Reihe die Ränder der Profilteile der anderen Reihe überlappen und daß vorzugsweise von der Innenfläche eines jeden Profilteils ausgehend sich ein Vorsprung in Richtung der Profilteilöffnung erstreckt, wobei der Vorsprung selbst im Schnitt knaufförmig ausgebildet sein kann. Hierdurch bieten sich mehrere Kammern an, durch die eine Verlangsamung bzw. Beschleunigung der hindurchtretenden Fluide erfolgt. Durch diese Beeinflussung der Strömungsgeschwindigkeit wird ein hoher Abscheidegrad ermöglicht, der sicherstellt, daß zumindest Partikelgrößen von mehr als 3$\mu$m ausgeschieden werden.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von in der Zeichnung dargestellten bevorzugten Ausführungsbeispielen.

Es zeigen:

Fig. 1 eine erste Ausführungsform einer erfindungsgemäßen Abscheidervorrichtung,

Fig. 2 eine Detaildarstellung einer der äußeren Abscheiderstufen der Fig. 1 und

Fig. 3 eine zweite Ausführungsform einer erfindungsgemäßen Abscheidervorrichtung.

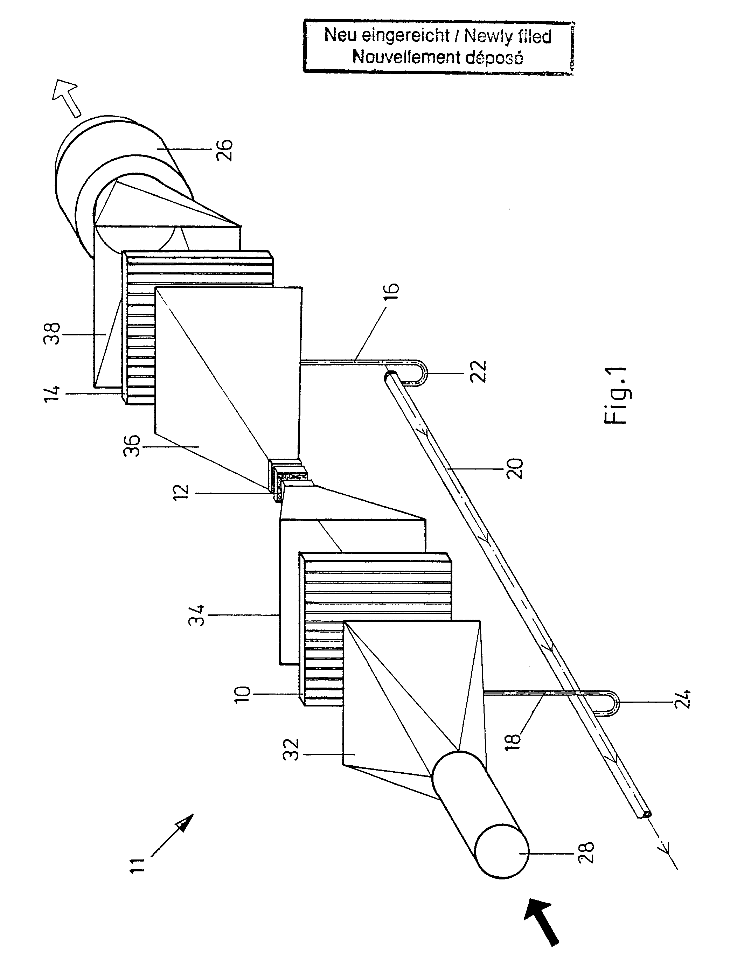

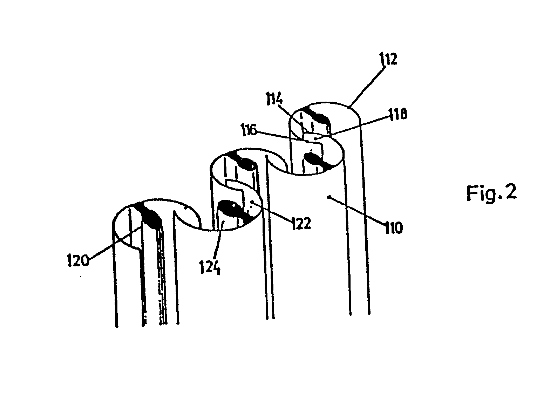

In Fig. 1 ist ein Abscheider (11) für gasförmige Fluide insbesondere zum Reinigen von Öldämpfen dargestellt, die von Bearbeitungsmaschinen für z.B. Kaltverformung oder spanabhebende Bearbeitung abgesaugt werden. Der Abscheider (11) besteht im Ausführungsbeispiel aus drei Stufen (10), (12) und (14), von denen die erste Stufe (10) und die dritte Stufe (14) gleich ausgebildet sind. Bei den Stufen (10) und (14) handelt es sich um Abscheideeinrichtungen, wie sie in der EP-OS 0206204 beschrieben sind und nachstehend an Hand der Fig. 2 näher erläutert werden.

So weisen die Stufen (10) bzw. (14) in zumindest zwei gegenüberliegenden Reihen angeordnete im Querschnitt offene, rinnenförmige erste und zweite Profilteile (110) und (112) auf, wobei die freien Längskanten der Ränder (114) der ersten Profilteile (110) die freien Längskanten der Ränder (116) der zweiten Profilteile (112) überlappen. Außerdem weist vorzugsweise jedes Profilteil (110) und (112) zur Bildung von Kammern (122) und (124) einen vom Scheitelbereich der Innenfläche ausgehenden sich in Richtung der Profilteilöffnung und entlang seiner Längsachse verlaufenden Vorsprung (120) auf. Dieser ist vorzugsweise im Querschnitt knaufförmig ausgebildet. Durch das Ineinandergreifen der Profilteile und der Ausbildung des Vorsprungs ergeben sich eine Vielzahl von Kammern (118) bzw. (122) und (124) durch die die zu reinigenden Fluide hindurchströmen. Dabei erfahren die Fluide derart eine Strömungsgeschwindigkeitsbeeinflussung, daß in den Fluiden vorhandene Partikel mit einen Durchmesser von in etwa mehr als 3$\mu$m sicher abgeschieden werden.

Hierzu gehören Feststoffpartikel wie z.B. Schleifstaub. Die abgeschiedenen Partikel wie z.B. Öl werden dann über Leitungen (16) bzw. (18) einer Sammelleitung (20) zugeführt, von der die ausgeschiedene Flüssigkeit abgeleitet wird. Zwischen den Leitungen (16) bzw. (18) und (20) ist jeweils ein Siphon (22) bzw. (24) ausgebildet, um zu gewährleisten, daß die Flüssigkeit nicht wieder durch den den Gesamtabscheider durchströmenden Luftstrom angesaugt wird, der durch einen saugseitig angeordneten Ventilator (26) erzeugt wird. Dabei kann der Ventilator (26) selbstverständlich auch druckseitig im Bereich eines Ansaugstutzens (28) angeordnet sein, der zum Maschineninnenraum führt, um von diesem die zu reinigenden Fluide abzuführen.

Die mittlere Stufe (12) ist als Agglomerator ausgebildet, d.h. kleine Partikel werden zu größeren agglomeriert. Dies ist nicht mit einem Kondensieren zu verwechseln, wodurch ein Abscheiden erfolgen würde. Dies ist jedoch nicht im Agglomerator gewünscht, da dieser andernfalls seine Wirkung verlieren würde. Grundsätzlich werden die in dem agglomerator (12) agglomerierten Partikel zu der Stufe (14) durch das hindurchströmende Gas wie Luft, dessen Geschwindigkeit 5m pro Sekunde betragen sollte, mitgerissen, um dort abgeschieden zu werden. Um eine Agglomeration von den die Stufe (10) durchdrungenen Kleinstpartikeln der Größe von kleiner als 3$\mu$m zu ermöglichen, ist der Agglomerator (12) vorzugsweise als Drahtgestrick ausgebildet. In diesem können Drahtfäden der Stärke 150$\mu$m verwoben sein, wobei beispielhaft die Fläche der Drahtfäden 652 m² pro 1 m³ Volumen betragen kann. Hieraus ergibt sich eine Drahtlänge von 4,1 km. In den Kreuzungspunkten der Drahtfäden erfolgt nun ein Agglomerieren der Kleinstpartikel zu größeren Tropfen, die erwähnterweise von dem Gas -wie Luftstrom-mitgerissen und in der Abscheiderstufe (16) abgeschieden werden.

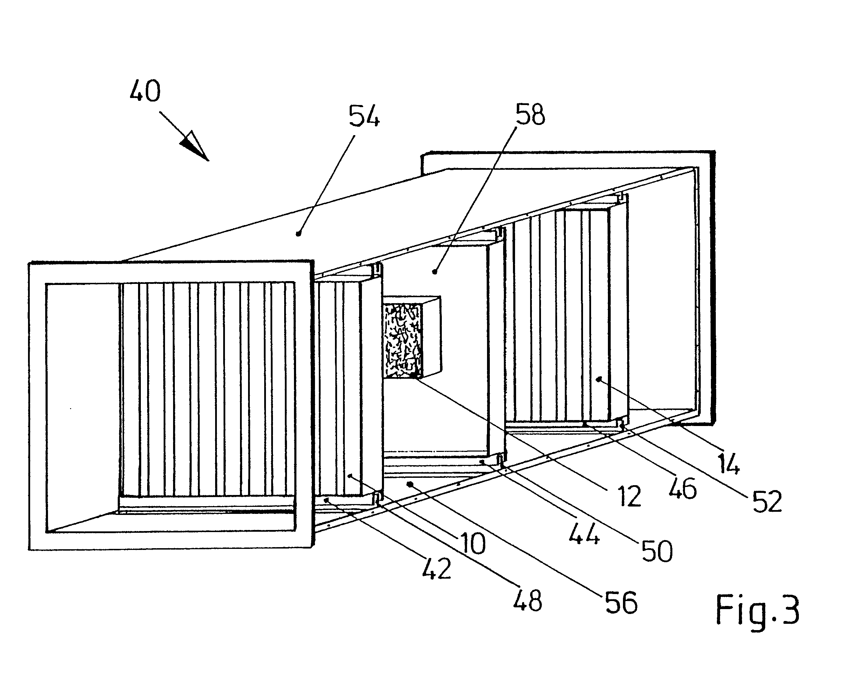

Um die erforderliche Luftgeschwindigkeit bzw. Teilchengeschwindigkeit im Bereich der Agglomeratorstufe (12) zu erzielen, ist deren Querschnitt kleiner als der der Angrenzenden äußeren Stufen (10) und (14). Hierdruch ergibt sich eine Querschnittsverringerung und damit Beschleunigung zum Agglomerator (12) hin bzw. eine Verlangsamung von diesem weg in Richtung der letzten Stufe (14). Hierzu ist es nicht erforderlich, daß trichterförmige sich verjüngende Kanäle (34) bzw. sich erweiternde Kanäle (36) zum Agglomerator (12) hin bzw. von diesem weg zwischen den Stufen (10) und (14) zur Begrenzung der zu reinigenden Fluide vorhanden sind, wie es in Fig. 1 dargestellt ist. Vielmehr können die Abscheiderstufen (10), (12) und (14) bevorzugterweise gemäß Fig. 3 in einem quaderförmigen Gehäuse (40) angeordnet sein.

Um ein leichtes Warten bzw. Austauschen bzw. eine gewünschte Abstandsveränderung vorzunehmen, weisen die einzelnen Abscheiderstufen (10), (12) und (14) quaderförmiger Geometrien in gegenüberliegenden Randbereichen U-förmige Schienen (42), (44) und (46) auf, um entlang von stegartigen Schienen (48), (50) und (52), die von gegenüberliegenden Innenflächen (54) und (56) des Gehäuses (40) ausgehen, verschoben und so festgelegt zu werden.

Die Abscheiderflächen der äußeren Stufen (10) und (14) entsprechen in etwa dem Innenquerschnitt des Gehäuses (40). Die Durchtrittsfläche des Agglomerators (12) entspricht in etwa 1/4 bis 1/10 der Fläche der jeweiligen äußeren Stufe (10) bzw. (14).

Der Agglomerator (12) in Form von vorzugsweise einem Drahtgewirk wird von einem dem Querschnitt des Gehäuses angepaßten Träger (58) aufgenommen, der außerhalb des Agglomerators (12) eine geschlossene Fläche aufweist, so daß die zu reinigenden Fluide zwangsläufig durch den Agglomerator (12) strömen müssen.

Sind im Ausführungsbeispiel der Fig. 3 nur zwei dem Aufbau nach der Fig. 2 entsprechende Abscheiderstufen (10) und (14) vorgesehen, so können selbstverständlich problemlos weitere Stufen in entsprechenden Schienen (48) bzw. (52) eingeschoben werden.

Die Gaszufuhr bzw. -abfuhr zu bzw. von der äußeren Stufe (10) bzw. (14) kann trichterförmig ausgebildet sein, wie es in Fig. 1 dargestellt und durch die Bezugszeichen (32) und (38) verdeutlicht worden ist.

Durch die erfindungsgemäße Lehre erfolgt demzufolge auf rein mechanischem Wege ein Filtern von Fluiden wie insbesondere Ölnebeln, ohne daß aufwendige Maßnahmen erforderlich sind. Dabei erfolgt ein problemloses Reinigen der einzelnen auch als Filterstufen zu bezeichnenden Abscheiderstufen dadurch, daß die abgeschiedenen Tropfen schwerkraftbedingt abfließen. Beim Agglomerator ist eine solche Verbindung nicht erforderlich, da ein Abscheiden nicht erfolgt. Vielmehr ergibt sich eine "Selbstreinigung", da das hindurchströmende Gas die an den Drahtfäden bzw. deren Kreuzungspunkten angesammelten Partikel mitreißt.

Zu den Abmessungen selbst ist noch zu bemerken, daß z.B. der Querschnitt der ersten und dritten Abscheiderstufe (10) bzw. (14) 40 x 40 cm² und der des Agglomerators (12) 17 x 17 cm² bei einer Tiefe von 10 cm betragen kann.

## Ansprüche

1. Abscheidervorrichtung (11) für gasförmige Fluide wie Ölnebel, insbesondere bestimmt zum Absaugen und Reinigen von von Bearbeitungsmaschinen aufsteigenden Öldämpfen, **dadurch gekennzeichnet,** daß die Abscheidervorrichtung (11) zumindest dreistufig ausgebildet ist, wobei äußere ein Abscheiden von Partikeln bewirkende Stufen (10, 14) jeweils in zumindest zwei gegenüberliegenden Reihen angeordnete einander zugewandte Profilteile (110, 112) aufweisen und eine innere Stufe ein eine Agglomeration von Partikeln bewirkender Agglomerator (12) ist.

2. Abscheidervorrichtung nach Anspruch 1, **dadurch gekennzeichnet,** daß die Abscheidervorrichtung (11) drei Stufen (10, 12, 14) umfaßt, wobei die dem Agglomerator (12) vor-und nachgeschaltete Stufe (10 bzw. 14) gleich ausgebildet ist.

3. Abscheidervorrichtung nach Anspruch 1, **dadurch gekennzeichnet,** daß der Agglomerator (12) ein Drahtgestrick ist.

4. Abscheidervorrichtung nach Anspruch 1, **dadurch gekennzeichnet,** daß der Querschnitt des von den Fluiden durchsetzten Agglomerators (12) kleiner als der der anderen Stufe bzw. Stufen (10 bzw. 14) ist.

5. Abscheidervorrichtung nach Anspruch 1, **dadurch gekennzeichnet,** daß die Fluidzu-bzw. -abführung zum bzw. vom Agglomerator (12) trichterförmig ausgebildet ist.

6. Abscheidervorrichtung nach Anspruch 1, **dadurch gekennzeichnet,** daß die das Abscheiden bewirkenden Stufen über Leitungen (16, 18) mit einer Ableitung (20) zum Abführen der abgeschiedenen Partikel verbunden sind, wobei gegebenenfalls in den Leitungen (16, 18) ein Sypon (22, 24) angeordnet ist.

7. Abscheidervorrichtung nach Anspruch 1, **dadurch gekennzeichnet,** daß ein Ventilator (26) vor der ersten oder nach der letzten Stufe (10) bzw. (14) angeordnet ist.

8. Abscheidervorrichtung nach Anspruch 1, **dadurch gekennzeichnet,** daß die Stufen (10, 12, 14) in einem quaderförmigen Gehäuse (40) lösbar angeordnet sind, wobei die Stufen von an Gehäuseinnenwandungen (54, 56) befestigten Schienen (48, 50, 52) aufgenommen sind.

9. Abscheidervorrichtung nach Anspruch 8, **dadurch gekennzeichnet,** daß dem Agglomerator (12) mehr als eine Stufe (10 bzw. 14) vor-und/oder nachgeordnet ist.

10. Abscheidervorrichtung (11) für gasförmige Fluide wie Ölnebel, insbesondere bestimmt zum Absaugen und Reinigen von von Bearbeitungsmaschinen aufsteigenden Öldämpfen, **gekennzeichnet durch**

-eine erste und eine dritte Abscheider-Stufe (10, 14), die zum Abscheiden von Partikeln jeweils in zumindest zwei gegenüberliegenden Reihen angeordnete einander zugewandte Profilteile (110, 112) aufweist, wobei die Ränder (114, 116) der Profilteile der einen Reihe die Ränder der anderen Reihe überlappen und von der Innenfläche eines jeden Profilteils ein Vorsprung (120) ausgeht, der sich sowohl in Richtung der Profilteilöffnung als auch in Längsrichtung des Profilteils erstreckt, und

-eine zweite Abscheider-Stufe (12), die ein eine Agglomeration von Partikeln bewirkender Agglomerator (14) ist und zwischen der ersten und dritten Stufe angeordnet ist.

11

32

10

34

36

12

14    38

26

16

28

18

20

22

24

Fig.1

0 280 160

Fig.2

0 280 160

Fig.3

40
54
58
14
52
46
12
44
50
10
42
48
56

0 280 160

Europäisches
Patentamt

# EUROPÄISCHER RECHERCHENBERICHT

Nummer der Anmeldung

EP 88 10 2237

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-2 135 210  (PREMABERG LTD) <br> * Insgesamt * <br> --- | 1-3,8 | B 01 D  45/08 <br> B 01 D  51/02 <br> B 01 D  50/00 |
| A | US-A-4 319 898  (M. MAYERHOFER) <br> * Insgesamt * <br> --- | 1-3,7 | |
| A | US-A-2 521 785  (A.M. GOODLOE) <br> * Insgesamt * <br> --- | 1,3,4 | |
| A | EP-A-0 206 204  (P. GUTERMUTH) <br> * Anspruch 1; Figur 1 * <br> --- | 10 | |
| A | GB-A-1 427 704  (G.A. DAVIES) <br> ----- | | |

|  |  |
|---|---|
| | RECHERCHIERTE SACHGEBIETE (Int. Cl.4) |
| | B 01 D  45/00 <br> B 01 D  50/00 <br> B 01 D  51/00 |

Der vorliegende Recherchenbericht wurde für alle Patentansprüche erstellt

| Recherchenort | Abschlußdatum der Recherche | Prüfer |
|---|---|---|
| DEN HAAG | 06-05-1988 | POLESAK, H.F. |

EPO FORM 1503 03.82 (P0403)

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
.......................................................................................
& : Mitglied der gleichen Patentfamilie, übereinstimmendes
    Dokument